# EUROPÄISCHE PATENTSCHRIFT

(11) **EP 0 631 359 B1**
(45) Veröffentlichungstag und Bekanntmachung des Hinweises auf die Patenterteilung: **02.04.1997**
(21) Anmeldenummer: 94107711.7
(22) Anmeldetag: 18.05.1994
(51) Int. Cl.: H02G 15/18, H02G 15/113

(54) **Kabelmuffe aus Kunststoff, bestehend aus einem geschlitzten Muffenrohr und stirnseitigen Dichtungskörpern**
Cable sleeve of plastic material comprising a slit sleeve tube and sealing end bodies
Manchon en matière synthétique pour câbles, qui comprend un tube de manchon fendu et des corps terminaux d'étanchéité

(30) Priorität: 27.05.1993 DE 4317724
(43) Veröffentlichungstag der Anmeldung: 28.12.1994
(73) Patentinhaber: RXS Kabelgarnituren Gesellschaft mit beschränkter Haftung, D-58093 Hagen (DE)
(72) Erfinder: Schölling, Reiner, D-58313 Herdecke (DE); Gräfe, Detlef, D-58135 Hagen (DE); Klostermeyer, Hermann, D-58039 Hagen (DE); Greisinger, Martin, Dipl.-Ing., D-58642 Iserlohn (DE)
(74) Vertreter: Fuchs, Franz-Josef, Dr.-Ing.

(56) Entgegenhaltungen:
- EP-A- 0 219 071
- DE-A- 2 742 760
- US-A- 3 663 740

## Beschreibung

Die Erfindung betrifft eine Kabelmuffe aus Kunststoff, bestehend aus einem geschlitzten Muffenrohr und stirnseitigen Dichtungskörpern, mit einer zusammenhängenden Dichtungseinlage in den Bereichen der Umfangsflächen der Dichtungskörper und des Längsverschlusses, wobei die zusammenhängende Dichtungseinlage zumindest in den entsprechenden Dichtungsbereichen auf dem Muffenrohr durchgehend und fest angeordnet ist.

Derartige Dichtungssysteme sind bereits aus der EP-A-0 219 071 bekannt. Dort wird ein endloser Dichtungsschlauch in den Dichtungsbereichen der Längsdichtung und zwischen den stirnseitigen Dichtungskörpern und dem Muffenrohr eingelegt. Besonders in den Längsdichtungsbereichen müssen dort jedoch besondere Maßnahmen zur Stützung des Dichtungssystems getroffen werden.

In der deutschen Offenlegungsschrift DE-A-27 42 760 wird eine Kabelmuffe aus Kunststoff beschrieben, die aus einem geschlitzten Muffenrohr und stirnseitigen Dichtungskörpern besteht, wobei eine zusammenhängende Dichtungseinlage in den Bereichen der Umfangsflächen der Dichtungskörper und des Längsverschlusses zumindest in den entsprechenden Dichtungsbereichen auf dem Muffenrohr durchgehend und fest angeordnet ist.

Für vorliegende Erfindung stellt sich nun die Aufgabe, die Dichtungssysteme in den Dichtungsbereichen des Längsverschlusses und zwischen den stirnseitigen Dichtungskörpern und dem Muffenrohr zu verbessern und zwar insbesondere bezüglich der Montagearbeiten, wobei die möglichen Fehlerquellen eingeschränkt werden sollen. Die gestellte Aufgabe wird mit Hilfe einer eingangs erläuterten Kabelmuffe dadurch gelöst, daß die Oberfläche der bandförmigen Dichtungseinlage quer zur Dichtungsrichtung wellenförmig ausgebildet ist oder daß die Oberfläche der Dichtungseinlage quer zur Dichtungsrichtung mehrere parallel verlaufende Einkerbungen aufweist. Eine weitere Lösung ist in dem kennzeichnenden Teil des unabhängigen Anspruchs 3 angegeben.

Vorteile gegenüber dem Stand der Technik ergeben sich mit der Kabelmuffe gemäß der Erfindung dadurch, daß die Montagearbeiten erleichtert und verkürzt werden, da jede Kabelmuffe bereits das entsprechende Dichtungssystem enthält und daß Fehlerquellen, die bei den bisherigen Montagearbeiten möglich waren, infolge der festen Anordnung entfallen. Diese Verbesserungen werden möglich, da die Umfangsdichtungen in den Dichtungskörperbereichen und die Längsdichtung im Verschlußbereich der Kabelmuffe zu einem zusammenhängenden System zusammengefaßt sind, so daß keine Trennstellen im Dichtungssystem auftreten. Da die Dichtungseinlage im Längsverschlußbereich in den sich gegenüberliegenden Längskanten befinden, sind besondere Versteifungsvorrichtungen innerhalb der Kabelmuffe nicht mehr notwendig. Das Dichtungsmaterial wird in den entsprechenden Bereichen eingeklebt oder aufvulkanisiert, wobei der Durchmesser des Muffenrohres mit aufgetragener Dichtungsfläche geringfügig kleiner ist als der Durchmesser der Dichtungskörper. Auf diese Weise ist sichergestellt, daß das Muffenrohr mit dem erforderlichen Schließdruck auf die Dichtungskörper aufgezogen wird. Die Stärke des elastischen Dichtungsmaterials, vorzugsweise Kautschuk oder Silikon, beträgt 1 bis 18 mm. Dadurch können eventuell auftretende Maßtoleranzen beim Muffenrohr oder bei den Dichtungskörpern ausgeglichen werden. Das Dichtungsmaterial kann nur im jeweils abzudichtenden Bereich aufgetragen sein; doch kann zum Beispiel auch die gesamte Innenfläche des Muffenrohres beschichtet werden. Außerdem kann die Dichtungsfläche mit Fetten, Ölen, zum Beispiel Silikonöl, bestrichen werden, um beim Verschließen des Muffenrohres ein besseres Gleitverhalten und geringere Schließkräfte zu erreichen.

Die Ausgestaltung der Dichtungen und der Dichtungsbereiche können beliebig variiert werden. Einige Ausführungsbeispiele werden im Anschluß anhand von sechzehn Figuren näher erläutert.
- Figur 1: zeigt die prinzipielle Anordnung der in Frage stehenden Dichtungsbereiche.
- Figur 2: zeigt eine Längsdichtung in Nut- und Federausbildung.
- Figur 3: zeigt eine Längsdichtung in planer Ausbildung.
- Figur 4: zeigt eine Längsdichtung mit gerundeten Dichtungsflächen.
- Figur 5: zeigt eine Längsdichtung mit abgewinkelten Dichtungsflächen.
- Figur 6: zeigt den Querschnitt einer Dichtungseinlage mit wellenförmiger Oberfläche.
- Figur 7: zeigt den Querschnitt einer Dichtungseinlage mit umlaufenden Erhebungen.
- Figur 8: zeigt den Querschnitt einer Dichtungseinlage mit Einkerbungen.
- Figur 9: zeigt den Querschnitt einer Dichtungseinlage mit gezackter Oberfläche.
- Figur 10: zeigt den Querschnitt einer Dichtungseinlage mit Erhebungen in ungleichem Abstand.
- Figur 11: zeigt den Querschnitt einer Dichtungseinlage mit wellenförmiger Oberfläche, wobei die einzelnen Wellen verschieden hoch sind.
- Figur 12: zeigt den Querschnitt einer Dichtungseinlage mit Erhebungen, deren Höhen verschieden sind, wobei die niedrigsten Erhebungen in der Mitte liegen.
- Figur 13: zeigt den Querschnitt einer Dichtungseinlage mit Erhebungen, deren Höhen verschieden sind, wobei die niedrigsten an den Rändern liegen.
- Figur 14: zeigt den Querschnitt einer Dichtungseinlage mit einer Oberfläche aus verschiedenen Formen.
- Figur 15: zeigt den Querschnitt einer Dichtungseinlage mit einem zusätzlichen Dichtungseinsatz.
- Figur 16: zeigt den Querschnitt einer Dichtungseinlage mit lamellenartig aufgebauter Oberfläche.

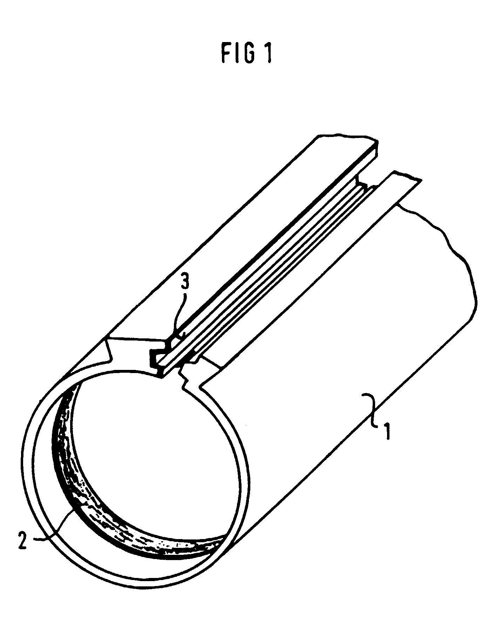

In Figur 1 ist eine Kabelmuffe mit der zusammenhängenden Dichtungseinlage 2-3 dargestellt, bestehend aus dem Dichtungsbereich 3 in der Längstrennung des Muffenrohres 1 und in den Dichtungsbereichen 2 zwischen den stirnseitigen Dichtungskörpern, die hier nicht gezeichnet sind. Diese Dichtungsbereiche 2 und 3 gehen ineinander über, so daß hier keine Trennung vorliegt, die früher immer zu Schwierigkeiten führte. Der Dichtungsbereich 2 ist hier aus einem umlaufenden Band gebildet, das fest mit dem Muffenrohr 1 durch Verklebung oder Vulkanisierung verbunden ist, so daß hier keine Montagearbeit mehr geleistet werden muß. Gleiches gilt für den weiterführenden Längsdichtungsbereich 3, der hier aus einer Nut- und Federdichtung gebildet ist. Das verwendete Dichtungsmaterial ist plastisch oder elastisch, so daß Toleranzen ausgeglichen werden können.

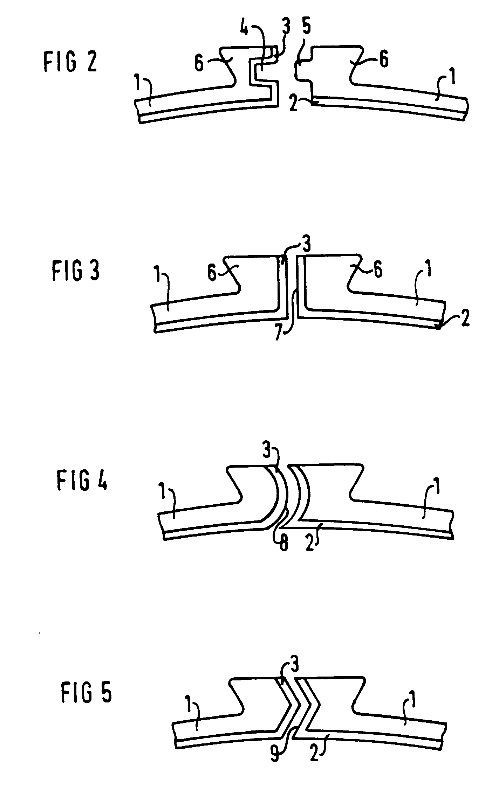

Figur 2 verdeutlicht in einem Schnittbild die Nut- und Federdichtung 4-5 des Muffenrohres 1, die in keilförmig verlaufenden Wülsten 6 des Muffenrohres 1 verläuft. Das Dichtungsmaterial des Dichtungsbereichs 2 der Dichtungskörper geht hier auf der Nutseite in der Längsdichtung 3 über. Die gegenüberliegende Feder 5 des Dichtungsbereiches taucht im montierten Zustand in die Dichtungsnut 4 ein.

Die Figur 3 zeigt einen Längsdichtungsbereich 3 mit plan ausgebildeten Dichtungsflächen 7, die mit Dichtungsmaterial durchgehend bis in die Dichtungsbereiche 2 der Dichtungskörper belegt sind.

Figur 4 zeigt eine Abwandlung nach Figur 3. Hier weisen die Dichtungsflächen 8 geeignete, korrespondierende Kurvenformen auf, so daß beim Zusammenfügen des Dichtungsbereiches 3 bereits eine gewisse Ausrichtung erfolgen kann.

Die Figur 5 zeigt eine weitere Variante des Längsdichtungsbereiches 3, der hier abgewinkelte Flächenbereiche 9 aufweist.

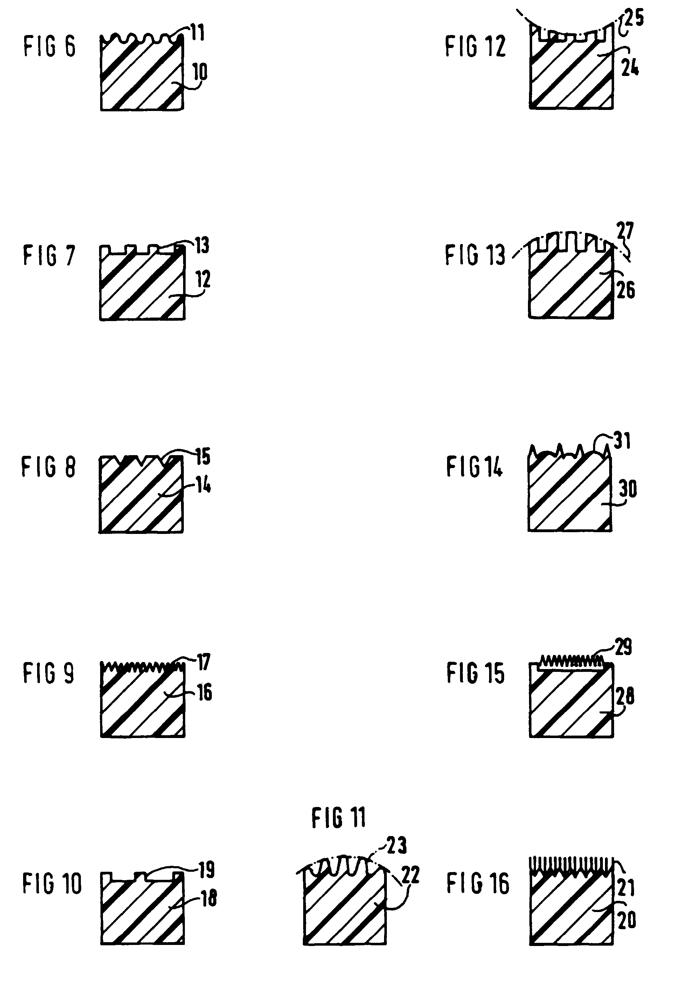

Die Figuren 6 bis 16 zeigen Ausführungsformen der in den Dichtungsbereichen 2 und 3 verwendeten Dichtungsprofile. Die profilierten Dichtungsflächen ergeben gewissermaßen Mehrkammersysteme, da das Dichtungssystem jeweils durch Erhebungen, Zwischenräume, Nuten oder dergleichen mehrfach in verschieden stark angepreßte Bereiche unterteilt wird. Zumindest wird durch eine derartige Oberflächengestaltung mit Profilen quer zur Dichtungsrichtung die Dichtungsstrecke verlängert und damit die Dichtwirkung verbessert. Dadurch werden Unregelmäßigkeiten und Toleranzen weitgehend ausgeglichen, wobei auch der Schließdruck bei gleicher Dichtwirkung insgesamt reduziert werden kann.

Bei allen Ausführungsbeispielen ist die profilierte Oberfläche der Dichtungseinlage zur korrespondierenden Dichtfläche des jeweiligen Dichtungssystems gerichtet. Mit der jeweils glatten, hier nicht gezeichneten Oberfläche wird die Dichtungseinlage im jeweiligen Dichtungsbereich durch die angedeuteten Maßnahmen befestigt.

Figur 6 zeigt eine Dichtungseinlage 10 mit einer in Längs- bzw. Umlaufrichtung gewellten Oberfläche 11.

Figur 7 zeigt eine Dichtungseinlage 12, deren Oberfläche längs- bzw. umlaufende, rechteckige Erhebungen 13 aufweist, die in unregelmäßigen Abständen voneinander angeordnet sind.

Figur 8 zeigt eine Dichtungseinlage 14 mit parallel verlaufenden Vertiefungen 15, die hier zum Beispiel dreieckförmig ausgebildet sind, in gleicher Anordnung wie vorher.

Die Dichtungseinlage 16 nach Figur 9 zeigt in Abwandlung zu Figur 6 eine mehrfach gezackte Struktur 17.

In Figur 10 wird eine Dichtungseinlage 18 mit längs- bzw. umlaufenden rechteckförmigen Erhebungen 19 dargestellt, deren Abstände größer sind als die Breite der Erhebungen 19.

Bei der Ausführung nach Figur 11 ist die wellenförmige Ausbildung 23 der Oberfläche an den Rändern geringer als in der Mitte der Dichtungseinlage 22.

Bei der Dichtungseinlage 24 nach Figur 12 wird eine rechteckige Oberflächenstruktur 25 verwendet, die an den Rändern höher ist als in der Mitte.

Die Figur 13 zeigt eine Ausbildung wie Figur 12, doch sind hier die Erhebungen 27 an den Rändern kleiner als in der Mitte der Dichtungseinlage 26.

Die Figur 14 deutet an, daß die Oberfläche 31 der Dichtungseinlage 30 mit verschiedenen Profilformen parallel nebeneinanderliegend versehen werden kann.

Bei dem Ausführungsbeispiel einer Dichtungseinlage 28 nach Figur 15 ist im mittleren Bereich eine zusätzliche längs- bzw. umlaufende Dichtungseinlage 29 eingesetzt, die zum Beispiel aus einem anderen Material bestehen kann und die aus anderem Material bestehen und eine beliebige Oberflächenstruktur aufweisen kann.

In Figur 16 ist noch eine Dichtungseinlage 20 gezeigt, deren Oberfläche eine Vielzahl von parallelen Lamellen 21 aufweist, wobei hier noch zusätzliche Grundprofile, hier ein zackenförmiges Profil, verwendet werden können.

## Patentansprüche

1. Kabelmuffe aus Kunststoff, bestehend aus einem geschlitzten Muffenrohr (1) und stirnseitigen Dichtungskörpern, mit einer zusammenhängenden Dichtungseinlage (2-3) in den Bereichen der Umfangsflächen der Dichtungskörper und des Längsverschlusses, wobei die zusammenhängende Dichtungseinlage (2-3) zumindest in den entsprechenden Dichtungsbereichen (2,3) auf dem Muffenrohr (1) durchgehend und fest angeordnet ist,
**dadurch gekennzeichnet,**
daß die Oberfläche (11) der bandförmigen Dichtungseinlage (10) quer zur Dichtungsrichtung wellenförmig ausgebildet ist, oder daß die Oberfläche der Dichtungseinlage (14) quer zur Dichtungsrichtung mehrere parallel verlaufende Einkerbungen (15) aufweist.

2. Kabelmuffe nach Anspruch 1,
**dadurch gekennzeichnet,**
daß die Abstände der parallel verlaufenden Profilierungen ungleich sind.

3. Kabelmuffe aus Kunststoff, bestehend aus einem geschlitzten Muffenrohr (1) und stirnseitigen Dichtungskörpern, mit einer zusammenhängenden Dichtungseinlage (2-3) in den Bereichen der Umfangsflächen der Dichtungskörper und des Längsverschlusses, wobei die zusammenhängende Dichtungseinlage (2-3) zumindest in den entsprechenden Dichtungsbereichen (2,3) auf dem Muffenrohr (1) durchgehend und fest angeordnet ist,
**dadurch gekennzeichnet,**
daß quer zur Dichtrichtung parallel verlaufende Lamellen (21) auf der Oberfläche der Dichtungseinlage (20) angeordnet sind.

4. Kabelmuffe nach einem der vorhergehenden Ansprüche 1 bis 3,
**dadurch gekennzeichnet,**
daß die parallel verlaufenden Erhebungen (25), Einkerbungen (27) oder Lamellen (21) verschiedene Höhen aufweisen.

5. Kabelmuffe nach einem der vorhergehenden Ansprüche 1 bis 4,
**dadurch gekennzeichnet,**
daß verschiedene Oberflächenprofilierungen (31) auf der Dichtungsoberfläche der Dichtungseinlage (30) miteinander kombiniert sind.

6. Kabelmuffe nach einem der vorhergehenden Ansprüche,
**dadurch gekennzeichnet,**
daß zusätzliche Dichtungsprofile (29) auf der Oberfläche der Dichtungseinlage (28) aufgebracht sind.

## Claims

1. Cable sleeve of plastic, comprising a slit sleeve tube (1) and sealing end bodies, having a continuous sealing insert (2-3) in the regions of the circumferential surfaces of the sealing bodies and of the longitudinal closure, the continuous sealing insert (2-3) being arranged right along and fixedly on the sleeve tube (1), at least in the corresponding sealing regions (2, 3), characterized in that the surface (11) of the strip-shaped sealing insert (10) is designed in a wave form transversely to the sealing direction, or in that the surface of the sealing insert (14) has a plurality of parallel-running notches (15) transversely to the sealing direction.

2. Cable sleeve according to Claim 1, characterized in that the distances between the parallel-running profilings are unequal.

3. Cable sleeve of plastic, comprising a slit sleeve tube (1) and sealing end bodies, having a continuous sealing insert (2-3) in the regions of the circumferential surfaces of the sealing bodies and of the longitudinal closure, the continuous sealing insert (2-3) being arranged right along and fixedly on the sleeve tube (1), at least in the corresponding sealing regions (2, 3), characterized in that parallel-running lamellae (21) are arranged transversely to the sealing direction on the surface of the sealing insert (20).

4. Cable sleeve according to one of the preceding Claims 1 to 3, characterized in that the parallel-running elevations (25), notches (27) or lamellae (21) have different heights.

5. Cable sleeve according to one of the preceding Claims 1 to 4, characterized in that different surface profilings (31) are combined with one another on the sealing surface of the sealing insert (30).

6. Cable sleeve according to one of the preceding claims, characterized in that additional sealing profiles (29) are provided on the surface of the sealing insert (28).

## Revendications

1. Manchon de câble en matière plastique, constitué d'un tube (1) de manchon fendu et d'éléments frontaux d'étanchéité, comportant un insert (2-3) d'étanchéité d'un seul tenant, situé dans les zones des faces du pourtour des éléments d'étanchéité et de la fermeture longitudinale, l'insert (2-3) d'un seul tenant étant disposé de manière continue et fixe sur le tube (1) du manchon au moins dans les zones (2, 3) d'étanchéité correspondantes, caractérisé en ce que la surface (11) de l'insert (10) d'étanchéité en forme de bande est réalisée de manière ondulée transversalement à la direction d'étanchéité ou en ce que la surface de l'insert (14) d'étanchéité comporte, transversalement à la direction d'étanchéité, plusieurs encoches (15) s'étendant parallèlement.

2. Manchon de câble suivant la revendication 1, caractérisé en ce que les distances entre des profilages s'étendant parallèlement ne sont pas les mêmes.

3. Manchon de câble en matière plastique, constitué d'un tube (1) de manchon fendu et d'éléments frontaux d'étanchéité, comportant un insert (2-3) d'étanchéité d'un seul tenant, situé dans les zones des faces du pourtour des éléments d'étanchéité et de la fermeture longitudinale, l'insert (2-3) d'un seul tenant étant disposé de manière continue et fixe sur le tube (1) du manchon au moins dans les zones (2, 3) d'étanchéité correspondantes, caractérisé en ce que des lamelles (21) s'étendant parallèlement à la direction d'étanchéité sont disposées à la surface de l'insert (20) d'étanchéité.

4. Manchon de câble suivant l'une des revendications 1 à 3 précédentes, caractérisé en ce que les crénelures (25), encoches (27) ou lamelles (21) s'étendant parallèlement ont des hauteurs différentes.

5. Manchon de câble suivant l'une des revendications 1 à 4 précédentes, caractérisé en ce que divers profilages (31) de surface sont combinés les uns aux autres à la surface d'étanchéité de l'insert (30) d'étanchéité.

6. Manchon de câble suivant l'une des revendications précédentes, caractérisé en ce que des joints (19) d'étanchéité profilés sont montés à la surface de l'insert (28) d'étanchéité.
